# EUROPEAN PATENT SPECIFICATION

(11) **EP 3 708 433 B1**
(45) Date of publication and mention of the grant of the patent: **12.07.2023**
(21) Application number: 18875824.7
(22) Date of filing: 02.11.2018
(51) Int. Cl.: B60R 13/02, B62D 27/06

(54) **INTERIOR TRIM PANEL OF VEHICLE PILLAR, AND VEHICLE**
INNENVERKLEIDUNGSPLATTE EINER FAHRZEUGSÄULE UND FAHRZEUG
PANNEAU DE GARNITURE INTÉRIEURE DE MONTANT DE VÉHICULE, ET VÉHICULE

(30) Priority: 07.11.2017 CN 201721475972 U
(43) Date of publication of application: 16.09.2020
(73) Proprietor: NIO (Anhui) Holding Co., Ltd., Hefei City, Anhui Province (CN)
(72) Inventor: XING, Zhe, Shanghai (CN); LV, Shengye, Shanghai (CN)
(74) Representative: Vossius & Partner Patentanwälte Rechtsanwälte mbB
(86) International application number: PCT/CN2018/113666
(87) International publication number: WO 2019/091339

(56) References cited:
- EP-A2- 0 736 422
- AT-A4- 502 474
- CN-A- 103 419 724
- CN-A- 104 442 685
- CN-U- 204 055 984
- CN-U- 205 737 309
- CN-U- 206 351 712
- CN-U- 207 481 798

## Description

### Field of the Invention

The present invention relates to the field of vehicle interior parts, and in particular to a vehicle pillar interior trim panel and a vehicle.

### Background of the Invention

A vehicle pillar is an important supporting component on a vehicle body. Customarily, pillars on one side of a vehicle from the headstock to the tailstock are called an A-pillar, a B-pillar, a C-pillar, and so on. A vehicle pillar interior trim panel is an interior trim part covering the interior of a vehicle pillar, and a safety belt webbing is generally arranged to pass through the pillar interior trim panel. Furthermore, on the pillar interior trim panels of some vehicle models, for example, a safety belt sliding plate structure (also called a safety belt height adjustment baffle) is also arranged on an upper interior trim panel of the B pillar to adjust the height of the safety belt.

The existing vehicle pillar interior trim panel has the following shortcomings:
Firstly, in order to reduce the gap between a B-pillar trim panel and a door trim panel, the upper interior trim panel of the B pillar of the existing vehicle is often made into an inverted draft structure. However, for the upper interior trim panel of the B pillar with a safety belt sliding plate, the pillar interior trim panel of the inverted draft structure is easily extruded by a sealing strip to deform, thereby leading to unsmooth movement of the safety belt sliding plate. One improvement method is to weld a rectangular frame with high strength on the inner side of the pillar interior trim panel to support the two sides of the pillar interior trim panel to prevent the deformation thereof, but this will greatly increase the manufacturing cost of the pillar interior trim panel and the material cost.

Secondly, on the vehicle model with side air curtains, in order to conveniently detach the pillar interior trim panel, the pillar interior trim panel is often fixed to the vehicle body by screws. In this manner, a detachable bulkhead cover needs to be arranged to detach the pillar interior trim panel, such that the appearance is unattractive.

In addition, when the pillar interior trim panel with the safety belt sliding plate is installed, when a bolt connection hole of the safety belt sliding plate is aligned with a safety belt bolt, the safety belt sliding plate is prone to move, resulting in inconvenient installation and increasing the difficulty of installation.

EP 0736422A2 discloses a trim component for mounting to a structural member of an automotive vehicle including a body fixedly mounted to a structural member, the body including a plurality of energy absorbing ribs spaced relative to one another along the body and disposed adjacent to the structural member when the trim component is mounted thereto. The energy absorbing ribs include a series of fingers extending from the body and spaced relative to one another. The fingers deflect upon contact with the structural member in response to a force acting on the body to absorb and dissipate the energy generated by the force.

CN 104442685A discloses a safety belt motion mechanism of a B column interior trimming panel assembly. The safety belt motion mechanism comprises a B column interior trimming panel body, a safety belt slide plate and a height adjustment button, wherein the B column interior trimming panel body is provided with a safety belt slide plate mounting hole, a plurality of safety belt slide plate clamping pins and safety belt slide plate slide way slide channels; a height adjustment button mounting hole, a safety belt outlet, height adjustment button slide channels and safety belt slide plate slide rails are arranged on the safety belt slide plate; the height adjustment button is provided with a pressed protrusion part and height adjustment button slide grooves, and slidably mounted on the back surface of the safety belt slide plate; the safety belt slide plate is slidably mounted on the back surface of the B column interior trimming panel body; a spring for resetting the height adjustment button is arranged between the safety belt slide plate and the height adjustment button.

### Summary of the Invention

The purpose of the present invention is to overcome the defects of the existing vehicle pillar interior trim panels, and to provide a vehicle pillar interior trim panel of a novel structure and a vehicle. The technical problem to be solved is to improve the deformation resistance of the interior trim panel and to simplify the sliding structure of a safety belt sliding plate.

The purpose of the present invention and the technical problems to be solved are achieved by the following technical solutions. A vehicle pillar interior trim panel proposed according to the present invention is defined by claim 1.

According to the aforementioned vehicle pillar interior trim panel, wherein the opposite side walls of the two flanges are further provided with one or more second reinforcing ribs, which are located on one sides of the first reinforcing ribs facing away from the interior trim panel body or located on the both sides of the first reinforcing ribs, and are connected with the first reinforcing ribs to strengthen the supporting effect of the first reinforcing ribs.

According to the aforementioned vehicle pillar interior trim panel, wherein there is a gap between the first reinforcing rib and the interior trim panel body, which is formed as a first chute along the length direction of the interior trim panel body; and the vehicle pillar interior trim panel further includes a safety belt sliding plate, and the side edges of the safety belt sliding plate can be accommodated in the first chute and slide along the length direction of the interior trim panel body.

According to the aforementioned vehicle pillar interior trim panel, wherein the opposite side walls of the two flanges are further provided with third reinforcing ribs, which are located in the first chute, and the length direction of which is consistent with the length direction of the first chute; the third reinforcing ribs abut against the edges on the both sides of the safety belt sliding plate, or abut against arc-shaped protrusions arranged on the edges on the both sides of the safety belt sliding plate, so as to prevent the safety belt sliding plate from moving along the width direction of the interior trim panel body.

According to the aforementioned vehicle pillar interior trim panel, wherein the vehicle pillar interior trim panel further includes one or more first buckles and one or more second buckles, the both ends of the first buckles and the second buckles are respectively clamped with the interior trim panel body and a vehicle pillar, the first buckles are non-detachably connected with the vehicle pillar, and the second buckles are detachably connected with the vehicle pillar; and the interior trim panel body is provided with first buckle bases for clamping the first buckles and second buckle bases for clamping the second buckles.

According to the aforementioned vehicle pillar interior trim panel, wherein a fourth reinforcing rib is arranged at the joint between the first buckle base and the interior trim panel body to enhance the strength of the first buckle base.

According to the aforementioned vehicle pillar interior trim panel, wherein the first buckle is a polyhexamethylene adipamide buckle.

According to the aforementioned vehicle pillar interior trim panel, wherein one of the interior trim panel body and the safety belt sliding plate is provided with a third buckle, and the other is provided with a third buckle mating part detachably connected with the third buckle for pre-tightening the safety belt sliding plate with the interior trim panel body during the loading and unloading of the vehicle pillar interior trim panel.

The purpose of the present invention and the technical problems to be solved can also be further achieved by the following technical solutions. A vehicle proposed according to the present invention includes the vehicle pillar interior trim panel described in any one of the foregoing solutions.

By means of the above technical solutions, the present invention at least has the following advantages and beneficial effects:
(1) The vehicle pillar interior trim panel of the present invention has the wavy reinforcing rib structure, which is more effective to resist the deformation of the interior trim panel compared with the existing straight or disconnected rib panels; and, the gap (the first chute) between the wavy reinforcing rib structure and the interior trim panel body is used to realize the sliding of the safety belt sliding plate and to adjust the height of the safety belt, so that no reinforcing frame needs to be welded to support the both sides of the trim panel, and the material cost and the tooling cost are reduced as a result;
(2) the vehicle interior trim panel of the present invention is provided with the first buckles that are made of a high-strength material and are non-detachably clamped with the vehicle pillar and the second buckles that are made of an ordinary plastic material and are detachably clamped with the vehicle pillar, when the vehicle pillar interior trim panel of the present invention is detached, the interior trim panel can be detached by pulling out the second buckles from the vehicle pillar at first, and then sliding the interior trim panel to make the first buckles slide out from the bases, in this way, the interior trim panel can be detached more conveniently while the strength connection between the interior trim panel and the pillar is ensured; and
(3) according to the present invention, through pre-tighthening structures (the third buckles and the mating parts) arranged on the interior trim panel body and the safety belt sliding plate, when the interior trim panel is installed and detached, the sliding plate and the interior trim panel body is relatively fixed, thereby improving the convenience of the final assembly operation.

The above description is only an overview of the technical solutions of the present invention. In order to understand the technical means of the present invention more clearly, the present invention can be implemented in accordance with the contents of the specification, and in order to make the above and other objects, features and advantages of the present invention more obvious and understandable, preferred embodiments are listed below and are descried in detail below in combination with drawings.

### Brief Description of the Drawings

Fig. 1 is a structural schematic diagram of a vehicle interior trim panel in one embodiment of the present invention.
Fig. 2 is a partial enlarged drawing of a location a in Fig. 1.
Fig. 3 is a partial enlarged drawing of the location a in Fig. 1 after a first buckle is separated from a first buckle base.
Fig. 4 is a partial enlarged drawing of a location b in Fig. 1.
Fig. 5 is a structural schematic diagram of a front face of a vehicle interior trim panel provided by one embodiment of the present invention.
Fig. 6 is a structural schematic diagram of a back surface of a vehicle interior trim panel provided by one embodiment of the present invention.
Fig. 7 is a partial enlarged drawing of a location c in Fig. 6.
Fig. 8 is a structural schematic diagram of a front face of a safety belt sliding plate provided by one embodiment of the present invention.
Fig. 9 is a structural schematic diagram of a back surface of a safety belt sliding plate provided by one embodiment of the present invention.

### [Reference Signs]

| | | | |
|---|---|---|---|
| 100: | interior trim panel body | 110: | flange |
| 111: | first reinforcing rib | 120: | first chute |
| 200: | safety belt sliding plate | 130: | sliding plate mounting hole |
| 220: | safety belt outlet | 112: | second reinforcing rib |
| 113: | third reinforcing rib | 140: | first buckle base |
| 150: | second buckle base | 310: | first buckle |
| 320: | second buckle | 141: | fourth reinforcing rib |
| 210: | sliding plate body mounting hole | 230: | height adjustment button |
| 400: | height adjustment button | 240: | arc-shaped protrusion |
| 250: | safety belt bolt connecting structure | 260: | second chute |
| 270: | spring | 280: | limiting rib |
| 410: | safety belt button connecting structure | 510: | third buckle |
| 520: | third buckle mating part | | |

### Detailed Description of the Embodiments

In order to further illustrate the technical means and effects adopted in the present invention to achieve the intended purpose of the invention, specific embodiments, features and effects of an air-conditioning air outlet structure proposed in accordance with the present invention are described in detail below, in conjunction with the drawings and preferred embodiments.

The interior trim panel structure of the present invention can be applied to various pillars of a vehicle body, and is particularly suitable for pillars provided with safety belts. Since a height-adjustable safety belt is usually arranged on an upper interior trim panel of a B-pillar of a vehicle, the present invention is better illustrated by mainly taking the upper interior trim panel of the B-pillar of the vehicle as an example in the following texts and drawings.

In order to conveniently describe the interior trim panel of the present invention, the following descriptions of the directions, orientations or positions of the interior trim panel and its components are mainly descriptions of directions, orientations or positions with reference to the vehicle or vehicle pillar after the interior trim panel is installed on the vehicle pillar. For example, upper, upper side and upper part refer to the direction of approaching or pointing to the roof; and lower, lower side and lower parts refer to the direction of approaching or pointing to the bottom of the vehicle.

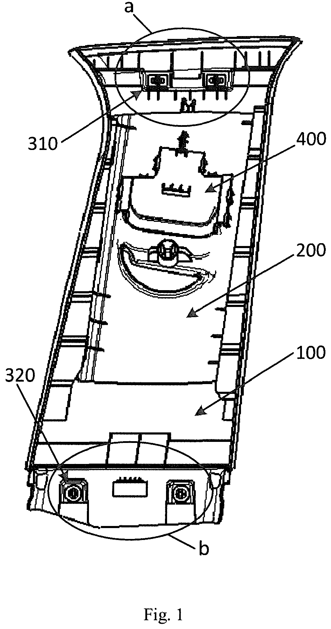

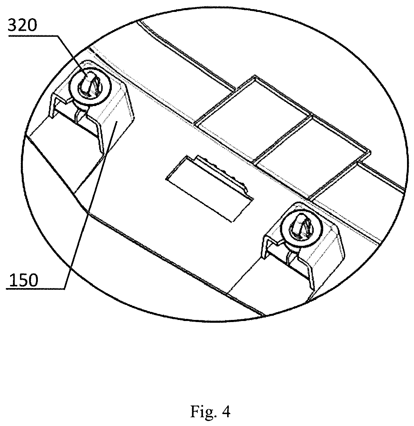

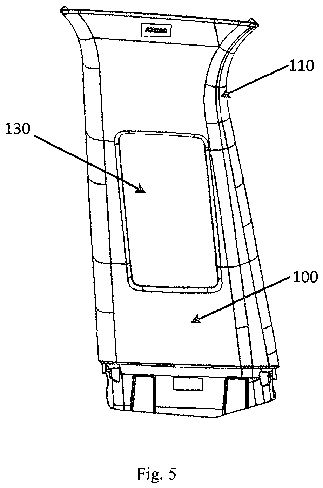

Please refer to Fig. 1, Fig. 2, Fig. 3, Fig. 4, Fig. 5, Fig. 6, Fig. 7, Fig. 8 and Fig. 9, a vehicle pillar interior trim panel proposed according to the present invention mainly includes: an interior trim panel body 100 used for wrapping and covering a vehicle pillar from the inner side of the carriage, the interior trim panel body 100 has a back surface that can be connected with the vehicle pillar, both sides of the interior trim panel body 100 are bent toward the back surface to form flanges 110, opposite side walls of the two flanges 110 are provided with a plurality of first reinforcing ribs 111 distributed along the length direction of the flanges 110, and the first reinforcing ribs 111 are of arch-shaped structures arching toward the interior trim panel body 100. Further, the adjacent first reinforcing ribs 111 can be connected to each other to form a wavy reinforcing structure, and compared with the existing structure provided with a plurality of independent rib plates, the wavy reinforcing structure can more effectively prevent the deformation of the two sides of the interior trim panel. Further, there is a gap between the first reinforcing rib 111 and the back surface of the interior trim panel body 100, which is formed as a first chute 120 along the length direction of the interior trim panel body 100, at the same time, the vehicle pillar interior trim panel further includes a safety belt sliding plate 200, and the safety belt sliding plate 200 can be accommodated in the first chute 120 and slide along the length direction of the interior trim panel body 100.

It should be noted that, when the vehicle pillar interior trim panel includes the safety belt sliding plate 200, a sliding plate mounting hole 130 is formed in the middle of the interior trim panel body 100, so that a safety belt outlet 220 and a height adjustment button 400 arranged on the safety belt sliding plate 200 can be exposed from or penetrated out from the sliding plate mounting hole 130.

In some embodiments, the arch-shaped first reinforcing ribs 111 are arranged in a straight line along the length direction of the flanges 110, and each two adjacent first reinforcing ribs 111 are connected to each other to form the wavy reinforcing structure. The arch-shaped vertexes of all first reinforcing ribs 111 form wave crests of the wavy reinforcing structure. The distance of the wave crest from the back surface of the interior trim panel body 100 is set to be approximately equal to the thickness of the safety belt sliding plate 200, so that the wave crest of the first reinforcing rib 111 can touch the back surface of the interior trim panel body 100, as a result, the gap between the first reinforcing rib 111 and the back surface of the interior trim panel body 100 is formed as the first chute 120 for accommodating the side edges of the safety belt sliding plate 200, in this way, the safety belt sliding plate 200 can slide along the length direction of the interior trim panel body 100 to prevent the safety belt sliding plate 200 from moving in a direction vertical to the plane where the interior trim panel body 100 is located.

The opposite side walls of the two flanges 110 are further provided with one or more second reinforcing ribs 112, which are located on one sides of the first reinforcing ribs 111 facing away from the interior trim panel body 100 or located on the both sides of the first reinforcing ribs 111 facing to and facing away from the both sides of the interior trim panel body 100, and the second reinforcing ribs 112 can be rectangular or triangular. When a plurality of second reinforcing ribs 112 are provided, the plurality of second reinforcing ribs 112 located on the same flange 110 can be arranged in parallel along the length direction of the flange 110 at intervals. One end of the second reinforcing rib 112 is connected with the first reinforcing rib 111, and can be connected to the joint of the two adjacent first reinforcing ribs 111 of the wavy reinforcing structure to strengthen the supporting effect of the first reinforcing ribs 111 and the wavy reinforcing structure. It should be noted that, the reinforcing ribs, as well as the reinforcing ribs and the interior trim panel body 100 can be integrally formed.

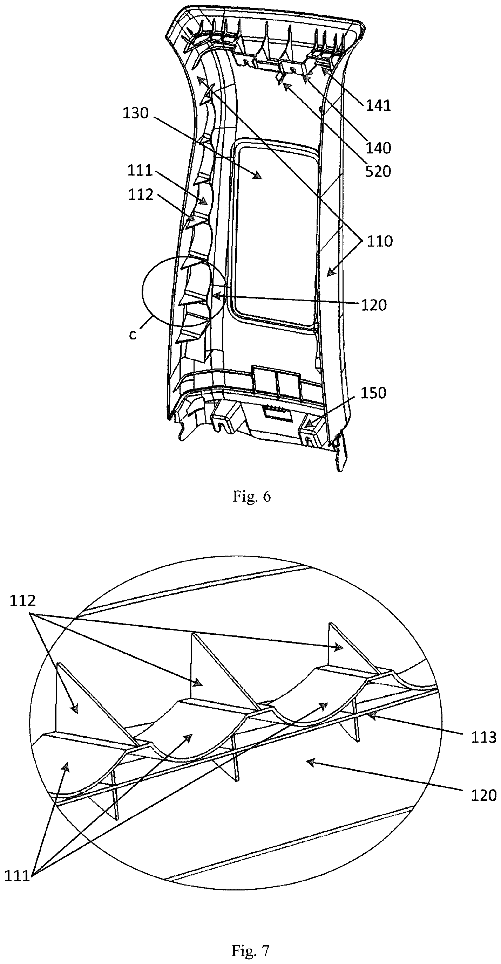

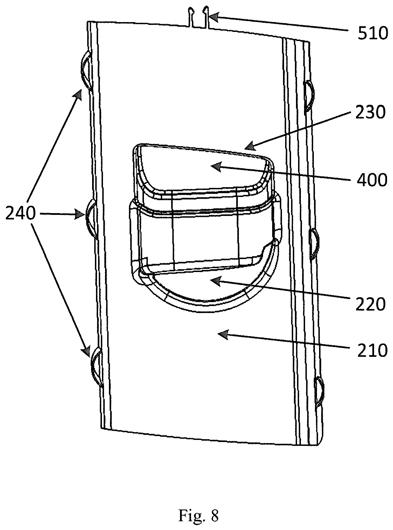

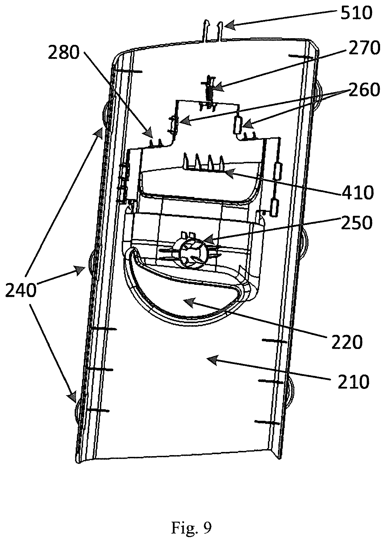

Further, please refer to Fig. 7, the opposite side walls of the two flanges 110 can be further provided with third reinforcing ribs 113, which are located on one sides of the first reinforcing ribs 111 facing to the interior trim panel body 100, and are located in the first chute 120 in fact, the third reinforcing ribs 113 can abut against the edges on the both sides of the safety belt sliding plate 200, in order to limit the movement of the safety belt sliding plate 200 along the width direction of the interior trim panel body 100. In a specific mode, the third reinforcing rib 113 includes a strip-shaped rib plate whose length direction is consistent with the length direction of the first chute 120, and a plurality rib plates vertical to the length direction of the strip-shaped rib plate and having the same height can also be arranged on the strip-shaped rib plate at intervals, so that the third reinforcing rib 113 takes the shape of a Chinese character "Feng", the third reinforcing rib 113 abuts against the edges of the both sides of the safety belt sliding plate 200, or, when arc-shaped protrusions 240 are arranged at the edges of the both sides of the safety belt sliding plate 200 (as shown in Fig. 8 and Fig. 9), the third reinforcing rib 113 abuts against the arc-shaped protrusions 240, in order to limit the movement of the safety belt sliding plate 200 along the width direction of the interior trim panel body 100. The side edge of the third reinforcing rib 113 can be connected with the first reinforcing rib 111, so as to reinforce the supporting effect of the first reinforcing rib 111 and the third reinforcing rib 113 at the same time. In fact, the third reinforcing rib 113 of the structure taking the shape of the Chinese character "Feng" in the specific mode can also be regarded as: a strip-shaped third reinforcing rib 113 whose length direction is consistent with the length direction of the first chute 120 is arranged on one side of the first reinforcing rib 111 facing to the interior trim panel body 100, and a plurality of second reinforcing ribs 112 are connected to and arranged on the both sides of the first reinforcing rib 111, furthermore, the second reinforcing rib 112 located on the side facing to the interior trim panel body 100 intersects with the strip-shaped third reinforcing rib 113 and has the same height as the strip-shaped third reinforcing rib 113, so that a reinforcing structure taking the shape of the Chinese character "Feng" is formed. It should be noted that the height of the third reinforcing rib 113 should be less than the height of the first reinforcing rib 111.

One end of the first chute 120 close to the bottom of the vehicle can be closed, for example, one end of the first reinforcing rib 111 at the bottommost end close to the bottom of the vehicle can be be connected to the back surface of the interior trim panel body 100, or a second reinforcing rib 112 close to the bottom of the vehicle is connected to the back surface of the interior trim panel body 100, so as to close the end of the first chute 120 close to the bottom of the vehicle to limit the sliding range of the safety belt sliding plate 200 and to prevent the safety belt sliding plate 200 from falling off due to the gravity. If there are other structures to limit the sliding range of the safety belt sliding plate 200, the end of the end of the first chute 120 close to the bottom of the vehicle can also not be closed.

The vehicle pillar interior trim panel of the present invention can further include one or more buckles, and the both ends of the buckles are respectively clamped with the interior trim panel body 100 and the vehicle pillar. A Corresponding buckle base is arranged on the back surface of the interior trim panel body 100, and the buckle base is provided with a groove for accommodating and clamping one end of the buckle. Further, a plurality of buckles are provided, one or more of the plurality of buckles are first buckles 310, which are non-detachably connected with the vehicle pillar, and one or more of the plurality of buckles are second buckle 320 which are detachably connected with the vehicle pillar.

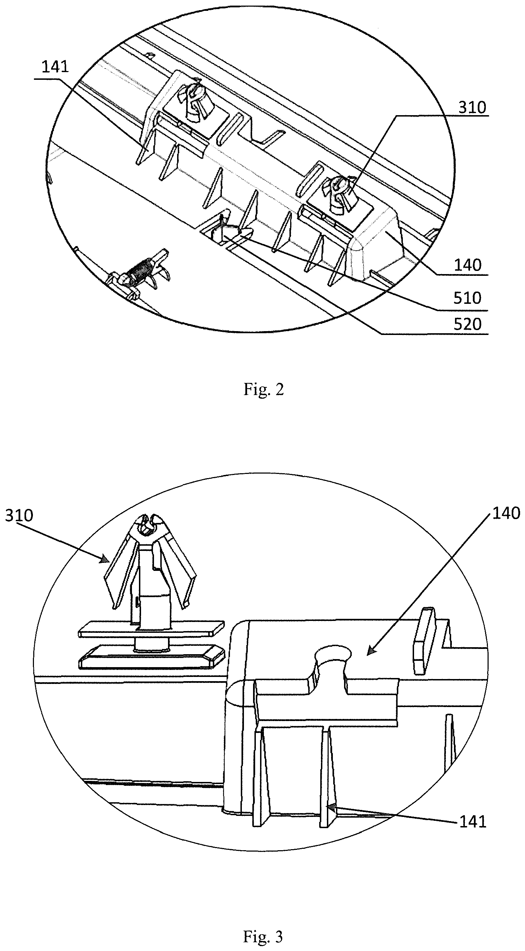

Specifically, as shown in Fig. 2 and Fig. 3, in some embodiments, a first buckle base 140 is arranged on one side of the back surface of the interior trim panel body 100 close to the roof, and a second buckle base 150 is arranged on one side close to the bottom of the vehicle. Furthermore, the vehicle pillar interior trim panel further includes the first buckle 310 and the second buckle 320. Both ends of the first buckle 310 are respectively clamped with the first buckle base 140 and the vehicle pillar, and the both ends of the second buckle 320 are respectively clamped with the second buckle base 150 and the vehicle pillar.

The first buckle base 140 is provided with a groove for clamping with one end of the first buckle 310, the opening of the groove faces to the bottom of the vehicle, and a notch is formed in the side wall of the groove close to the vehicle pillar for clamping one end of the first buckle 310 and causing the other end of the first buckle 310 to extend out. Similarly, the second buckle base 150 is provided with a groove for clamping with the second buckle 320, the opening of the groove faces to the bottom of the vehicle, and a notch is formed in the side wall of the groove close to the vehicle pillar. A fourth reinforcing rib 141 can be arranged at the joint of the first buckle base 140 and the interior trim panel body 100 to improve the strength of the first buckle base 140. The specific numbers of the first buckle bases 140 and the second buckle bases 150 can be single or multiple, and generally, two first buckle bases 140 and two second buckle bases 150 can be provided and are arranged at intervals along the width direction of the interior trim panel body 100.

The first buckle 310 is a non-detachable buckle, and the clamping with the vehicle pillar is non-detachable clamping, and only when the first buckle 310 is destroyed, the first buckle 310 can be detached from the vehicle pillar. The first buckle 310 can be a buckle made of high-strength plastic, for example, polyhexamethylene adipamide (commonly known as nylon 66 or PA66). In one example, the first buckle 310 includes a locking member taking the shape of a Chinese character "Ge", which is composed of a beam and two claws obliquely arranged at the top end of the beam, and is used for non-detachably clamping with the vehicle pillar.

The clamping of the second snap 320 with the vehicle pillar is detachable clamping, the material can be plastic, and the specific type of the selected plastic is not limited. In one example, the second buckle 320 includes a locking member formed by a beam bent into a hook shape for detachably clamping with the vehicle pillar.

The specific method of detaching the vehicle pillar interior trim panel of the present invention from the vehicle pillar is to pull out the second buckle 320 from the lower side of the interior trim panel body 100 at first, and then slide the interior trim panel body 100, so that the first buckle 310 at the upper side slides out from the first buckle base 140, thereby completing the disassembly of the pillar interior trim panel from the vehicle pillar.

Please refer to Fig. 8 and Fig. 9, the safety belt sliding plate 200 mainly includes a sliding plate body 210, a height adjustment button 400, a safety belt outlet 220, and a height adjustment button mounting hole 230.

The sliding plate body 210 is of a flat plate-shaped structure, is provided with a back surface facing to the vehicle pillar after being installed on the vehicle pillar, and a front face facing away from the back surface and facing to the inside of the carriage.

The two side edges of the safety belt sliding plate 200 can be accommodated in the first chutes 120 of the two flanges 110 at the same time, and contact with the flanges 110 at the same time, or, when the third reinforcing rib 113 is provided, the two side edges of the safety belt sliding plate abut against the third reinforcing rib 113 at the same time, so that the safety belt sliding plate 200 can slide in two first chutes 120 along the length direction of the interior trim panel body 100, and the safety belt sliding plate 200 is prevented from moving along the width direction of the interior trim panel body 100. Further, a plurality of arc-shaped protrusions 240 are arranged at the edges on the both sides of the safety belt sliding plate 200 and are distributed along the length direction of the safety belt sliding plate 200 at intervals, when the two side edges of the safety belt sliding plate 200 are accommodated in the first chutes 120, the arc-shaped protrusions 240 can abut against the third reinforcing rib 113 to improve the stability and smoothness of the safety belt sliding plate 200 when sliding.

The back surface of the safety belt sliding plate 200 is provided with a safety belt bolt connecting structure 250 for forming a bolt connection with the safety belt. Specifically, the safety belt bolt connecting structure 250 is sheathed on the outside of a safety belt bolt.

The height adjustment button 400 is connected with the back surface of the safety belt sliding plate 200 through a spring 270.

Due to the height adjustment button mounting hole 230, the convex portion on the front face of the height adjustment button 400 can pass through the height adjustment button mounting hole 230.

A plurality of second chutes 260 are formed in the back surface of the safety belt sliding plate 200 around the height adjustment button mounting hole 230, and the height adjustment button 400 can slide in the second chutes 260 along the length direction of the safety belt sliding plate 200. In addition, the sliding range of the height adjustment button 400 along the length direction of the safety belt sliding plate 200 is limited by the spring 270 and a limiting rib 280 arranged above the height adjustment button mounting hole 230 on the back surface of the safety belt sliding plate 200.

The back surface of the height adjustment button 400 is provided with a safety belt button connecting structure 410, and when the height adjustment button 400 is pressed, the purpose of unlocking the safety belt is achieved by the contact of the safety belt button connecting structure 410 with the safety belt button.

Optionally, a pre-tightening structure is arranged between the safety belt sliding plate 200 and the interior trim panel body 100, and includes a third buckle 510 arranged on one of the safety belt sliding plate 200 and the interior trim panel body 100, and a third buckle mating part 520 arranged on the other and capable of being detachably connected with the third buckle 510.

Specifically, please refer to Fig. 2, Fig. 6, Fig. 8 and Fig. 9. In some embodiments, the third buckle 510 is arranged at the edge of one end of the safety belt sliding plate 200 close to the roof, and includes two oppositely arranged cantilever hooks. The third buckle mating part 520 is arranged above the sliding plate mounting hole 130 in the back surface of the interior trim panel body 100, and includes a "Y"-shaped protrusion composed of three ribs plates. The "Y"-shaped third buckle mating part 520 can be clamped between the two cantilever hooks of the third buckle 510. Moreover, the clamping between the third buckle 510 and the third buckle mating part 520 is detachable clamping, for example, the lengths of the beams of the two cantilever hooks of the third buckle 510 can be increased, and the depths and angles of keeping surfaces of the two cantilever hooks can be decreased, plastic with lower rigidity can also be selected as the material of the third buckle 510, therefore, when an external force is applied, the third buckle 510 is easy to deform to disengage from the third buckle mating part 520, so as not to hinder the sliding of the safety belt sliding plate 200 in use due to the clamping the third buckle 510 with the third buckle mating part 520.

In the process of assembling and disassembling the vehicle pillar interior trim panel, by using the cooperation between the third buckle 510 and the third buckle mating part 520, the safety belt sliding plate 200 and the interior trim panel body 100 can be pre-tightened at first, so that the safety belt sliding plate 200 and the interior trim panel body 100 are relatively fixed, and then the vehicle pillar interior trim panel is loaded and unloaded, thereby improving the convenience of installation and disassembly.

The present invention further discloses a vehicle, including the vehicle pillar interior trim panel in any one of the above-mentioned embodiments.

The above descriptions are only the preferred embodiments of the present invention, and do not limit the present invention in any form.

## Claims

1. A vehicle pillar interior trim panel, comprising:
an interior trim panel body (100) and flanges (110) arranged on both sides of the interior trim panel body (100); and opposite side walls of the two flanges (110) are provided with a plurality of first reinforcing ribs (111) distributed along the length direction of the flanges (110), and the first reinforcing ribs (111) are of arch-shaped structures arching toward the interior trim panel body (100),
wherein the adjacent first reinforcing ribs (111) are connected to each other to form a wavy reinforcing structure.

2. The vehicle pillar interior trim panel according to claim 1, wherein the opposite side walls of the two flanges (110) are further provided with one or more second reinforcing ribs (112), which are located on one sides of the first reinforcing ribs (111) facing away from the interior trim panel body (100) or located on the both sides of the first reinforcing ribs (111), and are connected with the first reinforcing ribs (111) to strengthen the supporting effect of the first reinforcing ribs (111).

3. The vehicle pillar interior trim panel according to claim 1, wherein:
there is a gap between the first reinforcing rib (111) and the interior trim panel body (100), which is formed as a first chute (120) along the length direction of the interior trim panel body (100); and
the vehicle pillar interior trim panel further comprises a safety belt sliding plate (200), and the side edges of the safety belt sliding plate (200) can be accommodated in the first chute (120) and slide along the length direction of the interior trim panel body (100).

4. The vehicle pillar interior trim panel according to claim 3, wherein the opposite side walls of the two flanges (110) are further provided with third reinforcing ribs (113), which are located in the first chute (120), and the length direction of which is consistent with the length direction of the first chute (120); the third reinforcing ribs (113) abut against the edges on the both sides of the safety belt sliding plate (200), or abut against arc-shaped protrusions (240) arranged on the edges on the both sides of the safety belt sliding plate (200), so as to prevent the safety belt sliding plate (200) from moving along the width direction of the interior trim panel body (100).

5. The vehicle pillar interior trim panel according to claim 1, wherein:
the vehicle pillar interior trim panel further comprises one or more first buckles (310) and one or more second buckles (320), the both ends of the first buckles (310) and the second buckles (320) are respectively clamped with the interior trim panel body (100) and a vehicle pillar, the first buckles (310) are non-detachably connected with the vehicle pillar, and the second buckles (320) are detachably connected with the vehicle pillar; and
the interior trim panel body (100) is provided with first buckle bases (140) for clamping the first buckles (310) and second buckle bases (150) for clamping the second buckles (320).

6. The vehicle pillar interior trim panel according to claim 5, wherein a fourth reinforcing rib (141) is arranged at the j oint between the first buckle base (150) and the interior trim panel body (100) to enhance the strength of the first buckle base (140).

7. The vehicle pillar interior trim panel according to claim 5, wherein the first buckle (310) is a polyhexamethylene adipamide buckle.

8. The vehicle pillar interior trim panel according to claim 3, wherein one of the interior trim panel body (100) and the safety belt sliding plate (200) is provided with a third buckle (510), and the other is provided with a third buckle mating part (520) detachably connected with the third buckle (510) for pre-tightening the safety belt sliding plate (200) with the interior trim panel body (100) during the loading and unloading of the vehicle pillar interior trim panel.

9. A vehicle, comprising the vehicle pillar interior trim panel according to any one of claims 1-8.

## Patentansprüche

1. Innenverkleidungsplatte einer Fahrzeugsäule, Folgendes aufweisend:
einen Innenverkleidungsplattenkörper (100) und Flansche (110), die auf beiden Seiten des Innenverkleidungsplattenkörpers (100) angeordnet sind; und entgegengesetzte Seitenwände der zwei Flansche (110) sind mit mehreren ersten Verstärkungsrippen (111) versehen, die entlang der Längsrichtung der Flansche (110) verteilt sind, und wobei die ersten Verstärkungsrippen (111) aus bogenförmigen Strukturen gebildet sind, die zum Innenverkleidungsplattenkörper (100) hin gewölbt sind,
wobei die angrenzenden ersten Verstärkungsrippen (111) jeweils miteinander verbunden sind, um eine gewellte Verstärkungsstruktur auszubilden.

2. Innenverkleidungsplatte einer Fahrzeugsäule nach Anspruch 1, wobei die entgegengesetzten Seitenwände der zwei Flansche (110) ferner mit einer oder mehreren zweiten Verstärkungsrippen (112) versehen sind, die auf einer Seite der ersten Verstärkungsrippen (111) vom Innenverkleidungsplattenkörper (100) abgewandt angeordnet sind oder auf beiden Seiten der ersten Verstärkungsrippen (111) angeordnet sind und mit den ersten Verstärkungsrippen (111) verbunden sind, um die Stützwirkung der ersten Verstärkungsrippen (111) zu verstärken.

3. Innenverkleidungsplatte einer Fahrzeugsäule nach Anspruch 1, wobei:
es einen Spalt zwischen der ersten Verstärkungsrippe (111) und dem Innenverkleidungsplattenkörper (100) gibt, der als erstes Gefälle (120) entlang der Längsrichtung des Innenverkleidungsplattenkörpers (100) ausgebildet ist; und
die Innenverkleidungsplatte einer Fahrzeugsäule ferner eine Sicherheitsgurtschiebeplatte (200) aufweist und die Seitenkanten der Sicherheitsgurtschiebeplatte (200) in dem ersten Gefälle (120) aufgenommen und entlang der Längsrichtung des Innenverkleidungsplattenkörpers (100) verschoben werden können.

4. Innenverkleidungsplatte einer Fahrzeugsäule nach Anspruch 3, wobei die entgegengesetzten Seitenwände der zwei Flansche (110) ferner mit dritten Verstärkungsrippen (113) versehen sind, die im ersten Gefälle (120) angeordnet sind, und wobei deren Längsrichtung der Längsrichtung des ersten Gefälles (120) entspricht; wobei die dritten Verstärkungsrippen (113) an den Kanten auf beiden Seiten der Sicherheitsgurtschiebeplatte (200) anliegen oder an bogenförmigen Vorsprüngen (240), die an den Kanten auf beiden Seiten der Sicherheitsgurtschiebeplatte (200) angeordnet sind, anliegen, um zu verhindern, dass sich die Sicherheitsgurtschiebeplatte (200) entlang der Breitenrichtung des Innenverkleidungsplattenkörpers (100) bewegt.

5. Innenverkleidungsplatte einer Fahrzeugsäule nach Anspruch 1, wobei:
die Innenverkleidungsplatte einer Fahrzeugsäule ferner eine oder mehrere erste Schnallen (310) und eine oder mehrere zweite Schnallen (320) aufweist, wobei beide Enden der ersten Schnallen (310) und der zweiten Schnallen (320) jeweils am Innenverkleidungsplattenkörper (100) und einer Fahrzeugsäule eingespannt sind, wobei die ersten Schnallen (310) nicht lösbar mit der Fahrzeugsäule verbunden sind und die zweiten Schnallen (320) lösbar mit der Fahrzeugsäule verbunden sind; und
der Innenverkleidungsplattenkörper (100) mit ersten Schnallensockeln (140) zum Einspannen der ersten Schnallen (310) und zweiten Schnallensockeln (150) zum Einspannen der zweiten Schnallen (320) versehen ist.

6. Innenverkleidungsplatte einer Fahrzeugsäule nach Anspruch 5, wobei eine vierte Verstärkungsrippe (141) an der Verbindung zwischen dem ersten Schnallensockel (150) und dem Innenverkleidungsplattenkörper (100) angeordnet ist, um die Festigkeit des ersten Schnallensockels (140) zu verstärken.

7. Innenverkleidungsplatte einer Fahrzeugsäule nach Anspruch 5, wobei die erste Schnalle (310) eine Polyhexamethylenadipamidschnalle ist.

8. Innenverkleidungsplatte einer Fahrzeugsäule nach Anspruch 3, wobei der Innenverkleidungsplattenkörper (100) oder die Sicherheitsgurtschiebeplatte (200) mit einer dritten Schnalle (510) versehen ist und das jeweils andere Element mit einem dritten Schnallenverbindungsteil (520) versehen ist, der zum Vorspannen der Sicherheitsgurtschiebeplatte (200) mit dem Innenverkleidungsplattenkörper (100) während des Einsetzens und Herausnehmens der Innenverkleidungsplatte einer Fahrzeugsäule lösbar mit der dritten Schnalle (510) verbunden ist.

9. Fahrzeug, aufweisend die Innenverkleidungsplatte einer Fahrzeugsäule nach einem der Ansprüche 1-8.

## Revendications

1. Panneau de garniture intérieure de montant de véhicule, comprenant :
un corps de panneau de garniture intérieure (100) et des ailettes (110) disposées des deux côtés du corps de panneau de garniture intérieure (100) ; et des parois latérales en regard des deux ailettes (110) étant pourvues d'une pluralité de premières nervures de renforcement (111) réparties le long de la direction de longueur des ailettes (110), et les premières nervures de renforcement (111) étant des structures de forme arquée, arquées en direction du corps de panneau de garniture intérieure (100),
dans lequel les premières nervures de renforcement (111) adjacentes sont raccordées les unes aux autres pour former une structure de renforcement ondulée.

2. Panneau de garniture intérieure de montant de véhicule selon la revendication 1, dans lequel les parois latérales en regard des deux ailettes (110) sont pourvues, en outre, d'une ou de plusieurs deuxièmes nervures de renforcement (112), qui sont situées sur un côté des premières nervures de renforcement (111) orienté dans une direction divergeant du corps de panneau de garniture intérieure (100) ou sont situées sur les deux côtés des premières nervures de renforcement (111), et sont raccordées aux premières nervures de renforcement (111) afin de renforcer l'effet de soutien des premières nervures de renforcement (111).

3. Panneau de garniture intérieure de montant de véhicule selon la revendication 1, dans lequel :
un espace existe entre les premières nervures de renforcement (111) et le corps de panneau de garniture intérieure (100), celui-ci constituant une première glissière (120) le long de la direction de longueur du corps de panneau de garniture intérieure (100) ; et
le panneau de garniture intérieure de montant de véhicule comprenant, en outre, une plaque de coulissement de ceinture de sécurité (200), et les bords latéraux de la plaque de coulissement de ceinture de sécurité (200) pouvant être logés dans la première glissière (120) et coulisser le long de la direction de longueur du corps de panneau de garniture intérieure (100).

4. Panneau de garniture intérieure de montant de véhicule selon la revendication 3, dans lequel les parois latérales en regard des deux ailettes (110) sont pourvues, en outre, de troisièmes nervures de renforcement (113), qui sont situées dans la première glissière (120), et dont la direction de longueur coïncide avec la direction de longueur de la première glissière (120) ; les troisièmes nervures de renforcement (113) étant en appui contre les bords des deux côtés de la plaque de coulissement de ceinture de sécurité (200), ou étant en appui contre des protubérances de forme arquée (240) disposées sur les bords des deux côtés de la plaque de coulissement de ceinture de sécurité (200), de façon à empêcher un déplacement de la plaque de coulissement de ceinture de sécurité (200) le long de la direction de largeur du corps de panneau de garniture intérieure (100).

5. Panneau de garniture intérieure de montant de véhicule selon la revendication 1 :
le panneau de garniture intérieure de montant de véhicule comprenant, en outre, une ou plusieurs premières attaches (310) et une ou plusieurs deuxièmes attaches (320), les deux extrémités des premières attaches (310) et des deuxièmes attaches (320) étant respectivement mises en prise avec le corps de panneau de garniture intérieure (100) et un montant du véhicule, les premières attaches (310) étant raccordées de manière non détachable au montant du véhicule, et les deuxièmes attaches (320) étant raccordées de manière détachable au montant du véhicule ; et
le corps de panneau de garniture intérieure (100) étant pourvu de bases de premières attaches (140) pour mettre les premières attaches (310) en prise et de bases de deuxièmes attaches (150) pour mettre les deuxièmes attaches (320) en prise.

6. Panneau de garniture intérieure de montant de véhicule selon la revendication 5, dans lequel une quatrième nervure de renforcement (141) est disposée au niveau de la jonction entre la base de première attache (150) et le corps de panneau de garniture intérieure (100) pour augmenter la résistance de la base de première attache (140).

7. Panneau de garniture intérieure de montant de véhicule selon la revendication 5, dans lequel la première attache (310) est une attache en polyadipamide d'hexaméthylène.

8. Panneau de garniture intérieure de montant de véhicule selon la revendication 3, dans lequel l'un du corps de panneau de garniture intérieure (100) et de la plaque de coulissement de ceinture de sécurité (200) est pourvu d'une troisième attache (510), et l'autre est pourvu d'une partie d'accouplement de troisième attache (520) raccordée de manière détachable à la troisième attache (510) à des fins de préserrage de la plaque de coulissement de ceinture de sécurité (200) avec le corps de panneau de garniture intérieure (100) lors de la pose et la dépose du panneau de garniture intérieure de montant de véhicule.

9. Véhicule, comprenant le panneau de garniture intérieure de montant de véhicule selon l'une quelconque des revendications 1 à 8.
